# EUROPÄISCHE PATENTSCHRIFT

(11) **EP 3 726 202 B1**
(45) Veröffentlichungstag und Bekanntmachung des Hinweises auf die Patenterteilung: **21.12.2022**
(21) Anmeldenummer: 19020288.7
(22) Anmeldetag: 15.04.2019
(51) Int. Cl.: G01N 21/71, G01N 23/083, G01N 23/222, G01N 23/223, C10J 3/72

(54) **VERFAHREN ZUR ONLINE-STEUERUNG EINES SCHLACKE BILDENDEN VERGASUNGSPROZESSES UND ANLAGE FÜR EINEN VERGASUNGSPROZESS**
METHOD FOR ON-LINE CONTROL OF A SLAG FORMING GASIFICATION PROCESS AND INSTALLATION FOR A GASIFICATION PROCESS
PROCÉDÉ DE COMMANDE EN LIGNE D'UN PROCESSUS DE GAZÉIFICATION FORMANT DES MÂCHEFERS ET INSTALLATION POUR UN PROCESSUS DE GAZÉIFICATION

(43) Veröffentlichungstag der Anmeldung: 21.10.2020
(73) Patentinhaber: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Erfinder: Gräbner, Martin, 63755 Alzenau (DE); Baran, Adrianna, 01217 Dresden (DE); Örs, Evrim, 60594 Frankfurt (DE); Mönch, Hans-Peter, 60487 Frankfurt (DE)
(74) Vertreter: Stang, Stefan

(56) Entgegenhaltungen:
- EP-A1- 0 510 341
- WO-A2-2012/055753
- GB-A- 2 116 698
- US-A- 4 916 719
- US-A1- 2019 072 331

## Beschreibung

### Gebiet der Erfindung

Die Erfindung betrifft ein Verfahren zur online-Steuerung eines Schlacke bildenden Vergasungsprozesses eines kohlenstoffhaltigen Festbrennstoffs, insbesondere Kohle, in einem Vergasungsreaktor unter Zuführung eines Vergasungsmittels sowie eines Moderators. Die Erfindung betrifft ferner einen Vergasungsprozess zur Herstellung eines Kohlenstoffmonoxid und Wasserstoff aufweisenden Produktgases aus einem Festbrennstoff, ein Computerprogramm zur online-Steuerung des Schlacke bildenden Vergasungsprozesses sowie eine Anlage zur Durchführung eines Vergasungsprozesses zur Herstellung eines Kohlenstoffmonoxid und Wasserstoff aufweisenden Produktgases aus einem Festbrennstoff.

### Stand der Technik

Schlacke bildende Vergasungsprozesse zur Herstellung von Kohlenmonoxid (CO) und Wasserstoff (H₂) enthaltenden Produktgasen sind aus dem Stand der Technik bekannt. So wird beispielsweise Kohlenstoff aus Kohle bei der Kohlevergasung unter erhöhtem Druck und bei hohen Temperaturen in Synthesegas, einer Mischung aus CO und H₂, umgewandelt. Im Allgemeinen werden bei der Vergasung von Kohle Festbett-, Wirbelschicht- und Flugstromvergasung unterschieden. Kohle weist je nach Lagerstätte einen mehr oder weniger großen Anteil an anorganischen Mineralstoffen auf. Die bei der Vergasung als Asche-Rückstand anfallenden Mineralstoffe werden bei Schlacke bildenden Vergasungsverfahren als flüssige Schlacke aus dem Vergasungsreaktor ausgeschleust.

Online-Festbrennstoffanalysen zur Bestimmung der Zusammensetzung von festen Brennstoffen, beispielsweise Kohle, werden bisher im Bereich der Kohleverbrennung zur Stromerzeugung angewandt. Der Vorteil einer online-Festbrennstoffanalyse liegt in der kurzen Verzögerung zwischen Probennahme des Festbrennstoffs und Ausgabe des gewünschten Analyseergebnisses. Im Vergleich zu klassischen Labormethoden, die üblicherweise mehrere Stunden Analysezeit erfordern, ermöglichen online-Festbrennstoffanalysen eine Einbindung in Echtzeit in das Prozessleitsystem der betreffenden Anlage, beispielsweise eines Kohlekraftwerks.

Vergasungsprozesse, beispielsweise die Vergasung von Kohle, werden üblicherweise bei erhöhtem Druck (bis 68 bar) und hohen Temperaturen (900 bis 1800 °C) durchgeführt. Aufgrund dieser extremen Bedingungen, und durch die Präsenz korrosiver Schlacke-Schmelzen, sind direkte Messungen wichtiger Prozessparameter nicht ohne weiteres möglich. Beispiele für solche Prozessparameter sind der Schlackefluss (Massenstrom) und die Temperatur im Vergasungsreaktor. Dies hat zur Folge, dass für die Regelung von Vergasungsprozessen indirekte Messgrößen genutzt werden müssen. So kann beispielsweise die Prozesstemperatur über den Wärmeeintrag in das Reaktorkühlsystem, über Temperaturmessung in der Reaktorwand oder den Methan- (CH₄) oder den Kohlendioxid-Gehalt (CO₂) im Produktgas abgeschätzt werden (siehe zum Beispiel Gräbner, M.: "Industrial Coal Gasification Technologies Covering Baseline and High-Ash Coal", Wiley-VCH, ISBN 978-3-527-33690-6, 2014). Nachteilig an solchen Mess- und Regelverfahren ist zum einen, dass die Messung auf indirekte Weise erfolgt. Zum anderen handelt es sich bei den genannten Verfahren um sogenannte *feedback* Verfahren. Diese arbeiten auf der Basis von Messungen, welche erst dann erfolgen, wenn die eigentliche Vergasungsreaktion im Reaktor bereits erfolgt ist, ohne dass die Zusammensetzung des Festbrennstoffs vor Eintrag in den Reaktor in irgendeiner Weise berücksichtigt wurde. Die Regelung kann somit erst dann aufgrund der indirekten Messung in den Prozess eingreifen, wenn der entscheidende Schritt im Prozess, die Vergasung des Festbrennstoffs, bereits erfolgt ist.

Das Dokument EP 0 510 341 A1 beschreibt ein Verfahren und eine Vorrichtung zur Vergasung von kohlenstoffhaltigen Brennstoffen und die Steuerung dieser, wobei der Asche- und Wassergehalt vor der Zuführung in den Reaktor bestimmt wird mittels einer online-Messung.

Kurzfristige Schwankungen der Festbrennstoffqualität, insbesondere des Aschegehalts und der Aschezusammensetzung, können aufgrund der langen Intervalle zwischen den einzelnen Festbrennstoffanalysen in einem Labor nicht detektiert werden. Ferner können aufgrund indirekter Messungen von Prozessparametern häufig keine klaren Schlussfolgerungen für den Anlagenbetrieb gezogen werden. Da diese indirekten Messungen außerdem häufig nach dem *feedback* Prinzip arbeiten, reagieren diese erst mit großen zeitlichen Verzögerungen auf Veränderungen im Vergasungsprozess. Im Ergebnis können aufgrund der so erzielten Ergebnisse häufig keine klaren Schlussfolgerungen für den Anlagenbetrieb gezogen werden.

Somit werden die meisten Festbrennstoffvergaser nicht optimal betrieben. Eine häufig nur einmal täglich durchgeführte Festbrennstoffanalyse liegt meist erst vor, wenn der betreffende Festbrennstoff bereits vergast ist. Durch verspätete manuelle Eingriffe in den Vergasungsprozess auf Basis widersprüchlicher Trends indirekter und nach dem *feedback* Prinzip ermittelter Messgrößen ist der ideale Betriebspunkt des Vergasers damit nicht einstellbar. Weiterhin ist eine Automatisierung des Vergasungsprozesses auf Basis indirekter Messgrößen kaum möglich.

Ein besonders schwerwiegendes Problem bei Vergasungsverfahren stellen kurzfristige Schwankungen der Festbrennstoffqualität dar. Diese sind nicht nur bei Kohle anzutreffen, sondern auch bei anderen biogenen Festbrennstoffen (Biomasse, Klärschlamm) sowie Abfällen. Da Festbrennstoffe mit Hilfe von Förderbändern in Silos oder Vorlagebehälter transportiert werden, ist eine Entmischung (Segregation) nach Korngröße, Dichte, Feuchte oder Sorte (zum Beispiel bei Kohlemischungen) an allen Übergabepunkten unvermeidlich. Dadurch können innerhalb kurzer Zeiträume, wie weniger Stunden, für den Betreib des Vergasers signifikante Schwankungen in der Festbrennstoffqualität entstehen. So haben die Erfinder beim Betrieb von Anlagen zur verschlackenden Flugstaubvergasung von Kohle festgestellt, dass der reale Aschegehalt um mehrere Gewichtsprozente (Gew.-%) vom Referenzaschegehalt abweichen kann. Beispielsweise wurde ermittelt, dass bei einem gemessenen Referenzaschegehalt von 13 Gew.-% der reale Aschegehalt am Eingang des Vergasungsreaktors zwischen 11 Gew.-% und 18 Gew.-% schwanken konnte. Wird der Referenz-Betriebspunkt des Vergasungsreaktors trotzdem beibehalten, weil die Schwankung nicht detektierbar ist, wird entweder Produktgas (zum Beispiel Synthesegas) verbrannt oder ein schlechter Kohlenstoffumsatz erzielt, je nachdem, ob der reale Aschegehalt höher oder niedriger als der Referenzaschegehalt ist.

Im Falle eines höheren realen Aschegehalts im Vergleich zum Referenzaschegehalt ist die Folge, dass die Temperatur im Vergasungsreaktor aufgrund der exothermen Verbrennung des Produktgases zu hoch ist. Dies hat zur Folge, dass der Brenner in seiner Lebenszeit vermindert wird, dass der Verbrauch an Vergasungsmittel (zum Beispiel Sauerstoff) höher ist als im Grunde erforderlich (Überangebot von Sauerstoff im Verhältnis zum Kohlenstoff), die Produktgasproduktion vermindert ist, und dass erhöhte CO₂-Emissionen anfallen, sowohl aus dem Vergasungsprozess selbst als auch durch den erhöhten Elektroenergiebedarf bei der Sauerstoff-Erzeugung.

Im Falle eines niedrigeren realen Aschegehalts im Vergleich zum Referenzaschegehalt ist die Folge, dass nicht ausreichend Vergasungsmittel (zum Beispiel Sauerstoff) im Verhältnis zum höheren Kohlenstoffgehalt des Festbrennstoffs zur Verfügung gestellt wird. Dies hat zur Folge, dass die Temperatur im Vergasungsreaktor durch den Kohlenstoffüberschuss stark absinkt, was zum Erstarren der Schlacke und damit einer Notabschaltung der Anlage führen kann. Ferner hat dies zur Folge, dass ein Teil des Kohlenstoffs nicht zu Produktgas umgesetzt wird, was zu unerwünscht hohen Mengen an Kohlenstoff in der Asche/Schlacke sowie im Quenchwasser führt, der aufwändig daraus abgetrennt und entsorgt werden muss. Ferner hat dies zur Folge, dass die Produktgasmenge pro zugeführter Kohlenstoffmenge deutlich absinkt, was entsprechend zu Produktivitätseinbußen führt.

Die augenblicklichen Schwankungen in der Festbrennstoffqualität haben weiterhin zur Folge, dass die daraus resultierenden starken Betriebsschwankungen auch die oben erwähnten indirekten Messgrößen beeinflussen. So werden die indirekten Messgrößen beeinflusst durch eine schwankende Wärmeabfuhr in das Reaktorkühlsystem und dessen Dampfproduktion aufgrund von Temperaturschwankungen und einem veränderten Schlackeabfluss, durch Schwankungen der Menge und Zusammensetzung des Produktgases, sowie durch Schwankungen in der Zusammensetzung der Schlacke. Aufgrund dieser Probleme muss regelmäßig manuell in den Betrieb der Vergasungsanlage eingegriffen werden.

Ökonomische Randbedingungen erfordern ferner häufig, dass in Vergasungsanlagen der Festbrennstoff häufig zu wechseln ist, minderwertige Brennstoffe mit hohem Asche- und damit auch Schlacke-Gehalt einzusetzen sind, Flussmittel zur Verbesserung der rheologischen Eigenschaften der Schlacke zugegeben werden müssen und Brennstoffmischungen (zum Beispiel sogenannte Kohle-Blends) verwendet werden müssen. Dadurch werden die ohnehin existierenden Schwankungen in der Brennstoffqualität durch weitere Inhomogenitäten des Festbrennstoffs verstärkt.

Im Ergebnis ist festzustellen, dass es auf Basis vorhandener Technologie aufgrund von Schwankungen der Qualität des Festbrennstoffs, insbesondere aufgrund von Schwankungen des Aschegehalts und der Aschezusammensetzung, nicht ohne weiteres möglich ist, den optimalen Betriebspunkt eines Vergasungsreaktors einzustellen. Abweichungen vom optimalen Betriebspunkt des Vergasungsreaktors führen zu einem erhöhten Energieverbrauch der Anlage, einer verminderten Produktgasausbeute, erhöhtem Verschleiß sowie erhöhten CO₂-Emissionen, um nur einige Nachteile zu nennen.

### Beschreibung der Erfindung

Eine Aufgabe der vorliegenden Erfindung besteht somit darin, die Nachteile des Standes der Technik zumindest teilweise zu überwinden.

Eine weitere Aufgabe der vorliegenden Erfindung besteht darin, ein Verfahren bereitzustellen, welches die Ermittlung des optimalen Betriebspunktes des Vergasungsreaktors zu jeder Zeit, auch bei kurzfristigen Schwankungen in der Qualität des Festbrennstoffs, ermöglicht.

Eine weitere Aufgabe der vorliegenden Erfindung besteht darin, ein Verfahren bereitzustellen, welches dazu in der Lage ist eine optimierte Massen-, Elemente- und Energiebilanz eines Vergasungsreaktors auch bei kurzfristigen Schwankungen in der Qualität des Festbrennstoffs zu ermitteln.

Eine weitere Aufgabe der vorliegenden Erfindung besteht darin, ein Verfahren bereitzustellen, welches den Betriebspunkt, insbesondere den optimierten Betriebspunkt, eines Vergasungsreaktors zumindest teilweise nach dem *feed-forward* Prinzip ermittelt, wonach für die Einstellung des optimierten Betriebspunktes erforderliche Daten vor Eintritt des Festbrennstoffs in den Vergasungsreaktor ermittelt, ausgewertet und zur Steuerung des Verfahrens verwendet werden.

Eine weitere Aufgabe der vorliegenden Erfindung besteht darin, ein Verfahren zur online-Steuerung eines Schlacke bildenden Vergasungsprozesses eines kohlenstoffhaltigen Festbrennstoffs bereitzustellen, welches die vorgenannten Aufgaben zumindest teilweise löst.

Eine weitere Aufgabe der vorliegenden Erfindung besteht darin, einen Vergasungsprozess zur Herstellung eines Kohlenstoffmonoxid und Wasserstoff aufweisenden Produktgases bereitzustellen, welcher die vorgenannten Aufgaben zumindest teilweise löst.

Eine weitere Aufgabe der vorliegenden Erfindung besteht darin, ein in den Speicher eines Computers ladbares und ausführbares Computerprogramm zur zumindest teilweisen Steuerung eines Verfahrens bereitzustellen, welches die vorgenannten Aufgaben zumindest teilweise löst.

Eine weitere Aufgabe der vorliegenden Erfindung besteht darin, eine Anlage zur Durchführung eines Vergasungsprozesses zur Herstellung eines Kohlenstoffmonoxid und Wasserstoff aufweisenden Produktgases aus einem Festbrennstoff bereitzustellen, welche die vorgenannten Aufgaben zumindest teilweise löst.

Die vorgenannten Aufgaben werden zumindest teilweise gelöst durch ein Verfahren zur online-Steuerung eines Schlacke bildenden Vergasungsprozesses eines kohlenstoffhaltigen Festbrennstoffs, insbesondere Kohle, in einem Vergasungsreaktor unter Zuführung eines Vergasungsmittels sowie eines Moderators, umfassend die Schritte
a) Festlegung der Menge eines durch den Vergasungsprozess herzustellenden Produktgases, insbesondere eines Synthesegases;
b) Durchführen einer online-Festbrennstoffanalyse an einer vor Eintritt des Festbrennstoffs in den Vergasungsreaktor entnommenen Festbrennstoffprobe durch einen online-Festbrennstoffanalysator, zur Bestimmung des Aschegehalts sowie der Aschezusammensetzung des Festbrennstoffs vor Eintritt in den Vergasungsreaktor;
c) Auslesen von Betriebsdaten des Vergasungsreaktors über ein Prozessleitsystem;
d) Verarbeitung der Daten der online-Festbrennstoffanalyse sowie der Betriebsdaten des Vergasungsreaktors in einem Prozessmodell zur Ermittlung eines Betriebspunkts des Vergasungsreaktors bei gleichzeitiger Erreichung der festgelegten Produktgasmenge, wobei durch das Prozessmodell
   i. die Betriebstemperatur des Vergasungsreaktors auf Basis der durch die online-Festbrennstoffanalyse ermittelten Aschezusammensetzung bestimmt wird, um einen im wesentlich vollständigen Schlacke-Abfluss aus dem Vergasungsreaktor zu ermöglichen;
   ii. der erforderliche Massenstrom an Festbrennstoff auf Basis des durch die online-Festbrennstoffanalyse ermittelten Aschegehalts bestimmt wird; und
   iii. der erforderliche Massenstrom an Vergasungsmittel sowie Moderator auf Basis der Betriebsdaten des Vergasungsreaktors bestimmt wird;
e) Einstellen des Betriebspunkts des Vergasungsreaktors durch das Prozessleitsystem zur Steuerung des Vergasungsprozesses.

Dabei müssen die angegebenen Verfahrensschritte nicht zwangsläufig in der angegebenen Reihenfolge ausgeführt werden.

Die Erfindung kombiniert eine online-Festbrennstoffanalyse für feste Brennstoffe, wie beispielsweise Kohle, mit einem Prozessmodell, um den Schlacke bildenden Vergasungsprozess gemäß dem *feed-forward* Prinzip im thermodynamisch optimalen Betriebspunkt zu betreiben. Das Verfahren erlaubt die Einstellung des optimalen Betriebspunkts in Echtzeit, indem auf bisher nicht detektierte oder detektierbare kurzfristige Schwankungen in der Zusammensetzung des Festbrennstoffs reagiert wird. Das Verfahren erlaubt den vollständig automatisierten Betrieb eines Festbrennstoff-Vergasungsprozesses, ohne dass manuell in den Vergasungsprozess eingegriffen werden muss.

Das erfindungsgemäße Verfahren arbeitet im Gegensatz zu bisher bekannten Steuerungsverfahren nach dem *feed-forward* Prinzip. Gemäß diesem Prinzip wird die Zusammensetzung und der Anteil der Asche des Festbrennstoffs mit Hilfe des online-Festbrennstoffanalysators ermittelt, bevor der durch die Analyse repräsentierte Festbrennstoff in den Vergasungsreaktor eintritt. Gleichzeitig werden die vom Vergasungsreaktor erzeugten Betriebsdaten vom Prozessleitsystem der Anlage ausgelesen und zusammen mit den Analysedaten des online-Festbrennstoffanalysators in einem Prozessmodell verarbeitet. Das Prozessmodell berechnet den für den Betrieb des Vergasungsreaktors optimalen Betriebspunkt, bevor der durch die online-Festbrennstoffanalyse repräsentierte Festbrennstoff in den Vergasungsreaktor eintritt. Ist der Aschegehalt beispielsweise höher als der Referenzaschegehalt, so steht im Verhältnis weniger Kohlenstoff zur Verfügung und das Prozessmodell berechnet unter anderem, dass die Menge an Festbrennstoff, beispielsweise Kohle, dementsprechend erhöht wird um nicht unbeabsichtigt Teile des Produktgases zu verbrennen. Ist der Aschegehalt beispielsweise niedriger als der Referenzaschegehalt, so steht im Verhältnis mehr Kohlenstoff zur Verfügung und das Prozessmodell berechnet unter anderem, dass die Menge an Festbrennstoff, beispielsweise Kohle, verringert wird um die Kohlenstoff-Ausbeute zu erhöhen.

Unter dem Betriebspunkt wird ein Satz von Parametern verstanden, der einen optimalen Betrieb, das heißt optimale Betriebsbedingungen oder einen optimalen Betriebszustand ermöglichen, um den Vergasungsreaktor unter thermodynamisch optimalen Bedingen zu betreiben. Der Betriebspunkt des Vergasungsreaktors ändert sich kontinuierlich während des Betriebes zumindest in Abhängigkeit vom Aschegehalt und der Aschezusammensetzung des eingesetzten Festbrennstoffs. Der Betriebspunkt ist nicht vorab festlegbar und wird kontinuierlich, das heißt online, durch das Prozessmodell neu festgelegt. Der Betriebspunkt umfasst, ohne darauf beschränkt zu sein, eine Temperatur oder ein Temperaturintervall, welche oder welches so niedrig ist, dass einerseits ein möglichst hoher Kohlenstoffumsatz erzielt wird und gleichzeitig ein störungsfreier Ablauf der Schlacke sichergestellt ist. In einem Beispiel liegt der Kohlenstoffumsatz bei mindestens 90 %, vorzugsweise bei mindestens 95 %, und weiter bevorzugt bei mindestens 98 %. In Abhängigkeit von der Betriebstemperatur beträgt die Viskosität der Schlacke in einem Beispiel weniger als 25 Pa*s bei der jeweils vorherrschenden Betriebstemperatur im Vergasungsreaktor.

Im Sinne der vorliegenden Erfindung ermittelt das Prozessmodell die Energie-, Masse- und Elemente-Bilanz des Vergasungsprozesses, um den (optimalen) Betriebspunkt des Vergasungsprozesses zu berechnen. Die Energiebilanz des Vergasungsprozesses hängt von den vorherrschenden thermodynamischen Gleichgewichten und der Kinetik des Vergasungsprozesses ab. Aus der Energiebilanz kann die Betriebstemperatur ermittelt werden, welche einen Schlacke-Abfluss aus dem Reaktor sicherstellt.

Der Vergasungsreaktor im Sinne der Erfindung umfasst nicht nur den Reaktor als solchen, das heißt den Feststoffvergaser, in dem die eigentlich Umsetzung von Feststoff zu Produktgas stattfindet. Der Vergasungsreaktor umfasst ferner die mit dem Feststoffvergaser verbundene und für den Vergasungsprozess erforderliche Peripherie, wie beispielsweise einen Brenner, zu- und abführende Leitungen für Festbrennstoff, Fördergas, Vergasungsmittel sowie Moderator, ohne darauf beschränkt zu sein.

Der durch das Prozessmodell ermittelte (optimale) Betriebspunkt wird an das Prozessleitsystem der Anlage weitergegeben, welches den Betriebspunkt einstellt und den Vergasungsprozess dadurch steuert.

Unter einem Vergasungsmittel wird, ohne darauf beschränkt zu sein, ein Gas- oder Gasgemisch verstanden, welches exotherm mit dem Festbrennstoff reagiert, das heißt bei Reaktion mit dem Festbrennstoff eine negative Reaktionsenthalpie aufweist. Beispiele für typische Vergasungsmittel sind Luft, Sauerstoff und Wasserstoff.

Unter einem Moderator wird, ohne darauf beschränkt zu sein, ein Gas oder Gasgemisch verstanden, welches endotherm mit dem Festbrennstoff reagiert, das heißt bei Reaktion mit dem Festbrennstoff eine positive Reaktionsenthalpie aufweist. Zusätzlich oder alternativ dazu reagiert der Moderator nicht mit dem Festbrennstoff, sondern ist inert und führt Wärme aufgrund seiner Wärmekapazität aus dem Prozess ab. Zusätzlich oder alternativ dazu ist der Moderator eine Flüssigkeit, und Wärme wird aufgrund der Verdampfungsenthalpie des Moderators aus dem Prozess abgeführt. Beispiele für Moderatoren sind Dampf, CO₂, Wasser und Stickstoff. ***

Der Ausdruck "online" im Sinne der Erfindung bedeutet, ohne darauf beschränkt zu sein, dass der betreffende Schritt während des Betriebes, insbesondere fortlaufend während des Betriebes ausgeführt wird oder die betreffende Maschine während des Betriebes, insbesondere fortlaufend während des Betriebes arbeitet, beispielsweise Analysen durchführt.

Eine bevorzugte Ausführungsform des erfindungsgemäßen Verfahrens ist dadurch gekennzeichnet, dass die Schritte b) bis e) fortlaufend wiederholt werden, um in Abhängigkeit von zeitlichen Schwankungen des Aschegehalts und der Aschezusammensetzung des Festbrennstoffs kontinuierlich eine optimierte Betriebsweise des Vergasungsreaktors sicherzustellen oder kontinuierlich den Betriebspunkt des Vergasungsreaktors einzustellen.

Dabei ist es von Vorteil, die Schritte b) bis e) möglichst oft zu wiederholen, so dass das Prozessmodell auch kurzfristige Schwankungen der Festbrennstoffzusammensetzung berücksichtigen kann und der Betriebspunkt dementsprechend jeweils neu eingestellt werden kann, um möglichst zu keinem Zeitpunkt von der optimalen Betriebsweise des Vergasungsreaktors abzuweichen.

Eine weiter bevorzugte Ausführungsform des erfindungsgemäßen Verfahrens ist daher dadurch gekennzeichnet, dass die Schritte b) bis e) im Abstand von 10 Sekunden bis 300 Minuten wiederholt werden, vorzugsweise im Abstand von 1 Minute bis 60 Minuten wiederholt werden, besonders bevorzugt im Abstand von 3 Minuten bis 30 Minuten wiederholt werden, weiter bevorzugt im Abstand von 5 Minuten bis 10 Minuten wiederholt werden.

Eine bevorzugte Ausführungsform des erfindungsgemäßen Verfahrens ist dadurch gekennzeichnet, dass die Betriebstemperatur des Vergasungsreaktors auf Basis eines thermodynamischen Modells zur Bestimmung der Asche-Liquidustemperatur als Funktion der Aschezusammensetzung berechnet wird, wobei die berechnete Asche-Liquidustemperatur der Betriebstemperatur des Vergasungsreaktors entspricht.

Die einzustellende Betriebstemperatur ist eine möglichst nicht zu unterschreitende Mindesttemperatur, welche einen sicheren Abfluss von Schlacke - im Wesentlichen verflüssigter Asche - aus dem Vergasungsreaktor sicherstellen soll. Diese Temperatur hängt von der Zusammensetzung der Asche ab. Die Zusammensetzung der Asche wird durch den online-Festbrennstoffanalysator ermittelt. Somit ist es auf Basis der durch den online-Festbrennstoffanalysator ermittelten Daten möglich, auf Basis eines thermodynamischen Modells die sogenannten Liquidustemperatur der Asche, oder Asche-Liquidustemperatur, zu berechnen. Die Berechnung erfolgt durch das Prozessmodell. Dabei ist die Asche-Liquidustemperatur diejenige Temperatur, oberhalb derer keine Kristalle mehr in der Schmelze der Schlacke vorhanden sind.

Eine bevorzugte Ausführungsform des erfindungsgemäßen Verfahrens ist dadurch gekennzeichnet, dass die Betriebstemperatur des Vergasungsreaktors auf Basis eines künstlichen neuronalen Netzwerk-Modells zur Bestimmung der Asche-Fließtemperatur als Funktion der Aschezusammensetzung berechnet wird, wobei die Betriebstemperatur oberhalb der berechneten Asche-Fließtemperatur liegt, vorzugsweise 50 bis 100 K oberhalb der berechneten Asche-Fließtemperatur liegt.

Alternativ zur Bestimmung der Betriebstemperatur auf Basis der Asche-Liquidustemperatur ist die Ermittlung der Betriebstemperatur auch auf Basis der sogenannten Asche-Fließtemperatur möglich. Dabei wird die Asche-Fließtemperatur aus der Aschezusammensetzung mit Hilfe eines künstlichen neuronalen Netzwerkmodells berechnet. Dabei liegt die Betriebstemperatur oberhalb der berechneten Asche-Fließtemperatur. Vorzugsweise wird eine Betriebstemperatur gewählt, die 50 bis 100 K oberhalb der berechneten Asche-Fließtemperatur liegt. Der Begriff der "Asche-Fließtemperatur" ist als "Ash fluid temperature" in ASTM Standard D1857M - 04(2010) definiert.

Eine bevorzugte Ausführungsform des erfindungsgemäßen Verfahrens ist dadurch gekennzeichnet, dass die online-Festbrennstoffanalyse gemäß Schritt b) mit Hilfe eines Verfahrens ausgewählt aus der Gruppe umfassend
- prompt gamma neutron activation analysis (PGNAA),
- laser induced breakdown spectroscopy (LIBS) und
- Röntgen-Fluoreszenzanalyse (XRF)
durchgeführt wird.

Welches der genannten Verfahren zum Einsatz kommt, hängt von der Art des Festbrennstoffs, des typischen Aschegehalts und der typischen Aschezusammensetzung ab.

Das PGNAA Verfahren weist den Vorteil auf, dass damit nahezu alle im Festbrennstoff vorkommenden chemischen Elemente analysiert werden können. Somit können mit dem PGNAA Verfahren nicht nur die anorganische Verbindungen bildenden Elemente (Metalle, Halbmetalle) der Asche analysiert werden, sondern auch im Festbrennstoff enthaltene, organische Verbindungen bildende Elemente wie Kohlenstoff, Stickstoff und Sauerstoff. Dadurch ist mit Hilfe des PGNAA Verfahrens eine vollständige online-Analyse des Festbrennstoffs möglich. Aufgrund seiner erforderlichen, schnell abklingenden Strahlungsquelle ist die Installation eines PGNAA-Analysators jedoch mit relativ hohen Anforderungen für Zulassung, Wartung und Integration in die bestehende Anlage verbunden.

Das LIBS-Verfahren kann die wichtigsten chemischen Elemente des Festbrennstoffs detektieren, benötigt jedoch eine glatte, repräsentative, feinkörnige und flugstaubfreie Oberfläche des Analyten, was die Zuverlässigkeit des Messverfahrens im Betrieb beeinträchtigen kann.

Das XRF-Verfahren ist robust, kostengünstig und benötigt staubförmige Festbrennstoffe mit Korngrößen von kleiner als 200 µm Partikelgröße zur Analyse. Es erlaubt die sichere Detektion von chemischen Elementen mit einer Protonenzahl Z > 10. Somit können die anorganische Verbindungen bildenden Elemente der Asche des Brennstoffs zur Bestimmung der Aschezusammensetzung und des Aschegehalts zuverlässig detektiert werden. Aufgrund seiner Robustheit und günstigen Kosten wird das XRF-Verfahren vorzugsweise für die online-Brennstoffanalyse gemäß Schritt b) verwendet.

Beispiele für anorganische Verbindungen bildende Elemente, welche die Aschezusammensetzung und den Aschegehalt des Festbrennstoffs definieren, sind AI, Si, Fe, Ca, S, P, Cl, K, Ti, Cr sowie Mn. Zur Durchführung des erfindungsgemäßen Verfahrens ist es ausreichend, den Gehalt der Hauptelemente der Asche zu bestimmen, während in Spuren vorkommende Elemente nicht analysiert werden müssen. In Spuren vorkommende chemische Elemente beeinflussen den Aschegehalt und damit den (optimalen) Betriebspunkt des Vergasungsprozesses in so geringem Ausmaß, dass diese vernachlässigbar sind.

Eine bevorzugte Ausführungsform des erfindungsgemäßen Verfahrens ist dadurch gekennzeichnet, dass die Bestimmung des Aschegehalts und der Aschezusammensetzung auf Basis typischer Oxidationsverhältnisse der analysierten, anorganische Verbindungen bildenden Elemente erfolgt.

Die Asche eines Festbrennstoffs weist in jedem Fall chemische Elemente auf, die unabhängig von den Bedingungen im Vergasungsprozess in vollständig oxidierter Form vorliegen. Beispiele für solche Elemente sind Silicium (als SiO₂), Calcium (als CaO) sowie Aluminium (als Al₂O₃). Andere Elemente liegen abhängig vom Charakter der Atmosphäre im Vergasungsprozess (oxidierende oder reduzierende Atmosphäre) nicht oder unterschiedlich stark oxidiert vor. Ein Beispiel für ein solches Element ist Eisen, welches als elementares Eisen (Fe), FeO, Fe₃O₄, sowie Fe₂O₃ oder gemäß einer Mischung mit oder aus den vorgenannten Elementen in der Asche vorliegen kann. Dies führt abhängig von den jeweiligen Anteilen zu unterschiedlichen Asche-Fließtemperaturen oder Asche-Liquidustemperaturen. Daher ist es erforderlich, die genauen Oxidationsverhältnisse im Vorfeld der Anwendung des erfindungsgemäßen Verfahren in einem Ascheschmelztest unter oxidierender oder reduzierender Atmosphäre zu bestimmen. Dabei wird diejenige Atmosphäre angenommen, die unter den Bedingungen des Vergasungsprozesses vornehmlich vorliegt. Wurden die "typischen Oxidationsverhältnisse" einmal ermittelt, kann die durch den online-Festbrennstoffanalysator ermittelte Elemente-Zusammensetzung in eine Aschezusammensetzung umgerechnet und normiert werden.

Eine bevorzugte Ausführungsform des erfindungsgemäßen Verfahrens ist dadurch gekennzeichnet, dass das Verfahren die Bestimmung des organischen Anteils und der organischen Zusammensetzung des Festbrennstoffs sowie die Bestimmung des Wassergehalts des Festbrennstoffs vor Eintritt in den Vergasungsreaktor umfasst, und im Prozessmodell aus dem Aschegehalt, der Aschezusammensetzung, dem organischen Anteil, der organischen Zusammensetzung und dem Wassergehalt des Festbrennstoffs die Gesamtzusammensetzung des Festbrennstoffs ermittelt wird.

Die Ermittlung der Gesamtzusammensetzung des Festbrennstoffs ermöglicht eine weitere Präzisierung der im Prozessmodell verarbeiteten Daten, so dass die Bestimmung der Gesamtzusammensetzung des Festbrennstoffs die Bestimmung eines weiter optimierten Betriebspunktes erlaubt. Die Bestimmung des organischen Anteils und der organischen Zusammensetzung des Festbrennstoffs, das heißt die Bestimmung der chemischen Elemente C, H, N und S sowie die Bestimmung des Wassergehalts des Festbrennstoffs erfolgt, sofern diese nicht vom online-Festbrennstoffanalysator geliefert werden kann, im Vorfeld des Verfahrens, beispielsweise auf Basis einer durch den Lieferanten des Festbrennstoffs durchgeführten Elementaranalyse.

Dabei ist bevorzugt, dass aus der Gesamtzusammensetzung des Festbrennstoffs der Heizwert und/oder der Brennwert des Festbrennstoffs ermittelt wird.

Die Bestimmung des Heizwerts und/oder Brennwerts des Festbrennstoffs aus der Gesamtzusammensetzung erlaubt eine weitere Präzisierung der im Prozessmodell verarbeiteten Daten, so dass die Bestimmung des Heizwerts und/oder Brennwerts des Festbrennstoffs auf Basis seiner Gesamtzusammensetzung die Bestimmung eines weiter optimierten Betriebspunktes erlaubt, da die thermodynamische Bildungsenthalpie für Kohlenstoff (Graphit) durch den Brennwert präzisiert wird. Die Bestimmung des Heiz- und/oder Brennwerts erlaubt insbesondere eine genaue Berechnung der Energiebilanz des Vergasungsprozesses. Dabei wird unter dem Heizwert des Festbrennstoffs allgemein die freigesetzte Wärmemenge bei Verbrennung mit anschließender Abkühlung auf 25 °C bei Normaldruck verstanden, wobei die bei der Verbrennungsreaktion erzeugte Wasserdampf gasförmig vorliegt. Unter dem Brennwert des Festbrennstoffs wird der Heizwert plus die durch vollständige Kondensation von Wasserdampf bei Abkühlung auf 25 °C freigesetzte Wärmemenge (Kondensationsenthalpie) verstanden. Die Bestimmung des Heiz- und/oder Brennwerts kann auf Basis der Gesamtzusammensetzung des Festbrennstoffs beispielsweise mit Hilfe bekannter Näherungsformeln ermittelt werden (Ref. Gräbner, s.o.).

Eine bevorzugte Ausführungsform des erfindungsgemäßen Verfahrens ist dadurch gekennzeichnet, dass die Bestimmung des organischen Anteils und der organischen Zusammensetzung und/oder die Bestimmung des Wassergehalts des Festbrennstoffs durch den online-Festbrennstoffanalysator gemäß Schritt b) erfolgt.

Idealerweise erfolgt die Bestimmung des organischen Anteils und der organischen Zusammensetzung und/oder die Bestimmung des Wassergehalts des Festbrennstoffs ebenfalls fortwährend und zusammen mit der Bestimmung des Aschegehalts und der Aschezusammensetzung durch den online-Festbrennstoffanalysator. Dadurch können selbst Schwankungen in der Zusammensetzung des organischen Anteils und des Wassergehalts bei der Bestimmung des Betriebspunkts durch das Prozessmodell fortwährend berücksichtigt werden, was eine weitere Präzisierung der vom Prozessmodell verarbeiteten Daten und damit eine weiter optimierte Bestimmung des Betriebspunktes bedeutet.

Eine bevorzugte Ausführungsform des erfindungsgemäßen Verfahrens ist dadurch gekennzeichnet, dass das Verfahren die Bestimmung der Schüttdichte des Festbrennstoffs vor Eintritt in den Vergasungsreaktor umfasst.

Die Bestimmung der Schüttdichte des Festbrennstoffs vor Eintritt in den Vergasungsreaktor ermöglicht eine weitere Präzisierung der im Prozessmodell verarbeiteten Daten, so dass die Bestimmung der Schüttdichte des Festbrennstoffs die Bestimmung eines weiter optimierten Betriebspunktes erlaubt. Die Bestimmung der Schüttdichte erfolgt dabei nicht durch den online-Festbrennstoffanalysator, sondern im Vorfeld oder während des Verfahrens in ausgewählten Zeitabständen. Die Bestimmung der Schüttdichte ermöglicht insbesondere eine weiter präzisierte Bestimmung des im (optimierten) Betriebspunkt erforderlichen Massenstroms an Festbrennstoff.

Eine bevorzugte Ausführungsform des erfindungsgemäßen Verfahrens ist dadurch gekennzeichnet, dass das Verfahren die Bestimmung des Zeitintervalls zwischen der Entnahme der Festbrennstoffprobe und dem Eintritt des durch die Festbrennstoffanalyse repräsentierten Festbrennstoffs in den Vergasungsreaktor umfasst, um den gemäß Schritt d) ermittelten Betriebspunkt zum Zeitpunkt des Eintritts des durch die Festbrennstoffanalyse repräsentierten Festbrennstoffs in den Vergasungsreaktor über das Prozessleitsystem gemäß Schritt e) einzustellen.

Zwischen der Probennahme des Festbrennstoffs durch den online-Festbrennstoffanalysator und den Eintritt des eigentlichen Festbrennstoffs, der durch diese Probennahme repräsentiert ist, liegt ein zeitlicher Versatz. Dieser ist je nachdem, ob der online-Festbrennstoffanalysator nahe am Eingang zum Vergasungsreaktor oder weiter entfernt vom Eingang des Vergasungsreaktor angeordnet ist oder dazwischen liegende Behälter (z.B. Schleusen, Vorlagebehälter) vorhanden sind, mehr oder weniger groß. Der vom Prozessmodell auf Basis der online-Analyse ermittelte Betriebspunkt sollte in einem Idealfall jedoch erst dann vom Prozessleitsystem an den Vergasungsreaktor zur Steuerung des Vergasungsverfahrens übermittelt werden, wenn der durch die online-Festbrennstoffanalyse repräsentierte Festbrennstoff tatsächlich in den Vergasungsreaktor eintritt. Der vorgenannte zeitliche Versatz ist daher vorzugsweise zu ermitteln und bei der Durchführung des Verfahrens zu berücksichtigen.

Eine bevorzugte Ausführungsform des erfindungsgemäßen Verfahrens ist dadurch gekennzeichnet, dass der Festbrennstoff ausgewählt ist aus einem Element der Gruppe umfassend Kohle, Biomasse, Klärschlamm, Refuse Derived Fuel sowie mit Mineralien verunreinigte Kunststoffe.

Das erfindungsgemäße Verfahren ist im Prinzip auf jeden Festbrennstoff auf Kohlenstoff-Basis anwendbar, der bei der Vergasung zu einem Produktgas wie Synthesegas nicht vollständig umgesetzt wird, sondern mineralische Bestandteile enthält, welche bei der Vergasung als Asche-Rückstand zurückbleiben. Dabei spielt es keine Rolle, ob es sich bei dem Festbrennstoff um einen biogenen oder nicht-biogenen Festbrennstoff handelt.

Eine bevorzugte Ausführungsform des erfindungsgemäßen Verfahrens ist dadurch gekennzeichnet, dass die Festbrennstoffprobe zum Durchführen der online-Festbrennstoffanalyse in partikulärer Form, vorzugsweise in Staubform, bereitgestellt wird.

Die Bereitstellung der Festbrennstoffprobe in partikulärer Form erlaubt die unmittelbare Bestimmung der erforderlichen Daten durch den online-Festbrennstoffanalysator. Liegt der Festbrennstoff nicht bereits in partikulärer Form vor, wie beispielsweise bei der Flugstromvergasung von Kohle, kann der Festbrennstoff beispielsweise durch eine Mühle und/oder Trocknung in geeigneter Weise für die Probennahme vorbereitet werden.

Voraussetzung für das Funktionieren des erfindungsgemäßen Verfahrens ist die Festlegung der Menge des durch den Vergasungsprozess herzustellenden Produktgases. Die Ermittlung der Masse-, Elemente- und Energie-Bilanz des Vergasungsprozesses durch das Prozessmodell ist nur möglich, wenn die zu produzierende Produktgasmenge definiert wurde.

Das Produktgas des Vergasungsprozesses kann jedes Gas sein, das durch die Vergasung eines kohlenstoffhaltigen Festbrennstoffs zugänglich ist. Beispiele für Produktgase sind Synthesegas, Wassergas oder Spaltgas. Vorzugsweise weist das Produktgas zumindest H₂ und CO als Komponenten im Produktgasgemisch auf und eignet sich beispielsweise für die Herstellung von Methanol.

Um den (optimalen) Betriebspunkt des Vergasungsreaktors durch das Prozessmodell zu ermitteln, ist unter anderem das Auslesen der Betriebsdaten des Vergasungsreaktors über ein Prozessleitsystem erforderlich. Das bedeutet, um den optimalen Betrieb des Vergasungsreaktors zu ermitteln, müssen verschieden Betriebsdaten oder Randbedingungen bekannt sein, welche je nach Ausgestaltung des jeweiligen Prozesstyps ausgewählt werden.

Zu diesen Randbedingungen gehören, ohne dass die folgende Aufzählung erschöpfend oder beschränkend ist, die Zusammensetzung, der Druck und die Temperatur des für die Förderung des Festbrennstoffs erforderlichen Fördergases. Beispiele für Fördergase sind N₂ und CO₂. Beim sogenannten Slurry-Eintrag ist kein Fördergas erforderlich. Ferner gehört zu diesen Randbedingungen die Beladung des Fördergases mit Festbrennstoff sowie der Brennstoffmassenstrom. Ferner gehört zu diesen Randbedingungen die Zusammensetzung, der Druck, die Temperatur und die Menge von Spülgasen. Ferner gehört zu diesen Randbedingungen die Reinheit, der Druck und die Temperatur des Vergasungsmittels, beispielsweise von Sauerstoff. Ferner gehört zu diesen Randbedingungen der Druck, die Temperatur und die Menge des Moderators, beispielsweise von Dampf. Ferner gehören zu diesen Randbedingungen die aktuelle Menge, Temperatur und Druck des im Reaktorkühlsystem erzeugten Dampfes sowie Druck und Temperatur des Kesselspeisewassers. Ferner gehört zu diesen Randbedingungen der jeweils aktuelle Füllstand eines, mehrerer oder aller Behälter zwischen online-Festbrennstoffanalyse und Eintrag des Festbrennstoffs in den Vergaser sowie der Massenfluss des Festbrennstoffs.

Das Prozessmodell ermittelt auf Basis der Daten der online-Festbrennstoffanalyse sowie der Betriebsdaten des Vergasungsreaktors den (optimalen) Betriebspunkt des Vergasungsreaktors, wobei der Betriebspunkt so ermittelt wird, dass gleichzeitig die festgelegte, das heißt die zu produzierende Produktgasmenge, erreicht wird. Für die Ermittlung des Betriebspunkts ist zumindest die Bestimmung der Betriebstemperatur des Vergasungsreaktors, der erforderliche Massenstrom an Festbrennstoff sowie der erforderliche Massenstrom an Vergasungsmittel sowie Moderator gemäß der Schritte d) i. bis iii. erforderlich.

Abhängig von den Randbedingungen des jeweiligen Vergasungsprozess können folgende Aspekte bei der Ermittlung des (optimalen) Betriebspunktes eine Rolle spielen, ohne dass die folgende Aufzählung erschöpfend oder beschränkend ist. In einem Aspekt führt das Prozessmodell die Daten der vollständig ermittelten Festbrennstoffzusammensetzung, der Spülgase, des Brennstoffmassenstroms, der Fördergase, sowie des Vergasungsmittels und des Moderators in einem Bilanzmodell unter Berücksichtigung der jeweils ermittelten physikalischen Eigenschaften zusammen. In einem weiteren Aspekt kann die aktuelle Menge an Moderator konstant gehalten werden, während die Menge an Vergasungsmittel erhöht wird, bis ein Ziel-Kohlenstoffumsatz von wenigstens 95 %, bevorzugt wenigstens 98 %, besonders bevorzugt wenigstens 99 % und weiter bevorzugt wenigstens 99,9 % erreicht ist. In einem weiteren Aspekt wird die Menge an Moderator, beispielsweise von Dampf, erhöht, wenn die ermittelte Prozesstemperatur höher ist als die auf Basis der Aschezusammensetzung ermittelte Betriebstemperatur. In einem weiteren Aspekt wird die Menge an Moderator, beispielsweise von Dampf, verringert, wenn die ermittelte Prozesstemperatur niedriger ist, als die auf Basis der Aschezusammensetzung ermittelte Betriebstemperatur. In einem weiteren Aspekt wird, ausgehend von den Mengen an Vergasungsmittel und Moderator bei Betriebstemperatur, die Abweichung einer daraus prognostizierten Menge an Produktgas von der festgelegten Produktgasmenge ermittelt. Auf Basis der ermittelten Abweichung werden die Mengen an Festbrennstoff (Brennstoffzufuhr), Vergasungsmittel, Moderator und Fördergas angepasst, um die festgelegte Produktgasmenge zu erreichen. In einem weiteren Aspekt wird auf Basis der Füllstände der Behälter, der Schüttdichte des Brennstoffs, vorzugsweise der Schüttdichte des trockenen und gemahlenen Brennstoffs der Zeitpunkt ermittelt, wann der durch die online-Festbrennstoffanalyse repräsentierte Festbrennstoff in den Vergasungsreaktor tatsächlich eingetragen wird. Ab diesem Zeitpunkt ist der vorherig ermittelte Betriebspunkt gültig. Der so ermittelte Betriebspunkt ist bis zur Durchführung der nächsten online-Festbrennstoffanalyse gültig.

Der durch das Prozessmodell ermittelte Betriebspunkt wird durch das Prozessleitsystem eingestellt, um den Vergasungsreaktor auf Basis der im Betriebspunkt definierten Parameter zu steuern. Dabei sind folgende Steuergrößen zur Steuerung des Vergasungsprozesses und/oder Vergasungsreaktors umfasst, wobei die folgende Aufzählung weder erschöpfend noch beschränkend ist.

In einem Aspekt ist die Menge der Zufuhr an Festbrennstoff, beispielsweise der Brennstoffmassenstrom, als Steuergröße umfasst. In einem weiteren Aspekt ist die Menge an Vergasungsmittel, beispielsweise ausgedrückt als Verhältnis von Sauerstoff zu Kohle, als Steuergröße umfasst. In einem weiteren Aspekt ist die Menge an Moderator, beispielsweise ausgedrückt als Verhältnis zu H₂O zu Sauerstoff, als Steuergröße umfasst.

### Geänderte Beschreibung zu EP 19020288.7

Das erfindungsgemäße Verfahren ermöglicht es somit erstmals, auf kurzfristige Schwankungen der Festbrennstoffqualität zu reagieren und den Wirkungsgrad der Produktgaserzeugung kontinuierlich am thermodynamischen Maximum zu fahren. Der Vergasungsprozess kann ferner vollständig automatisiert werden.

Die Aufgaben der Erfindung werden ferner zumindest teilweise gelöst durch einen Vergasungsprozess zur Herstellung eines Kohlenstoffmonoxid und Wasserstoff aufweisenden Produktgases aus einem Festbrennstoff unter erhöhtem Druck und bei erhöhter Temperatur, umfassend ein erfindungsgemäßes Verfahren zur online-Steuerung eines Vergasungsprozesses.

Die Aufgaben der Erfindung werden ferner zumindest teilweise gelöst durch ein Computerprogramm, ladbar in den Speicher einer Datenverarbeitungsvorrichtung einer erfindungsgemäßen Anlage zum Durchführen von Schritt d) bei der Durchführung des erfindungsgemäßen Verfahrens zur online-Steuerung eines Vergasungsprozesses.

Das erfindungsgemäße Computerprogramm ist somit dazu in der Lage, die Daten der online-Festbrennstoffanalyse sowie die Betriebsdaten des Vergasungsreaktors zu verarbeiten, und in einem Prozessmodell zur Ermittlung des Betriebspunkts des Vergasungsreaktors umzusetzen.

Die Aufgaben der Erfindung werden ferner zumindest teilweise gelöst durch eine Anlage zur Durchführung eines Vergasungsprozesses zur Herstellung eines Kohlenstoffmonoxid und Wasserstoff aufweisenden Produktgases aus einem Festbrennstoff unter erhöhtem Druck und erhöhter Temperatur, aufweisend einen Festbrennstoffvorlagebehälter; Fördermittel zum Transportieren des Festbrennstoffs vom Festbrennstoffvorlagebehälter in einen Vergasungsreaktor; Fördermittel zum Zuführen von Vergasungsmittel und Moderator zum Vergasungsreaktor; Fördermittel zum Abziehen des erzeugten Produktgases aus dem Vergasungsreaktor; eine zwischen dem Festbrennstoffvorlagebehälter und dem Vergasungsreaktor angeordnete Probenentnahmestelle zur Entnahme von Festbrennstoffproben und anschließender Durchführung einer online-Festbrennstoffanalyse zur Ermittlung der Zusammensetzung und des Anteils der Asche des Festbrennstoffs in einem mit der Probenentnahmestelle gekoppelten online-Festbrennstoffanalysator; ein mit dem Vergasungsreaktor gekoppeltes Prozessleitsystem; und eine mit dem online-Festbrennstoffanalysator und dem Prozessleitsystem gekoppelte Datenverarbeitungsvorrichtung zur Verarbeitung der im online-Festbrennstoffanalysator ermittelten Analysedaten sowie zur Verarbeitung der durch das Prozessleitsystem an die Datenverarbeitungsvorrichtung übermittelten Betriebsdaten des Vergasungsreaktors, wobei aus den Analysendaten des Festbrennstoffanalysators und den Betriebsdaten des Vergasungsreaktors in der Datenverarbeitungsvorrichtung über ein Prozessmodell ein Betriebspunkt des Vergasungsreaktors ermittelbar ist, und der Vergasungsprozess über den von der Datenverarbeitungsvorrichtung an das Prozessleitsystem übermittelten Betriebspunkt steuerbar ist.

In einem Beispiel handelt es sich bei dem Vergasungsprozess um einen Schlacke bildenden Vergasungsprozess. In diesem Fall weist die Anlage Fördermittel zum Abziehen der Schlacke aus dem Vergasungsreaktor auf. In einem Beispiel handelt es sich bei den Fördermitteln um einen Schlackeabzug.

### Ausführungsbeispiel

Die Erfindung wird im Folgenden durch ein Beispiel näher erläutert, ohne den Gegenstand der Erfindung zu beschränken. Weitere Merkmale, Vorteile und Anwendungsmöglichkeiten der Erfindung ergeben sich aus der nachfolgenden Beschreibung des Ausführungsbeispiels in Zusammenhang mit der Zeichnung.

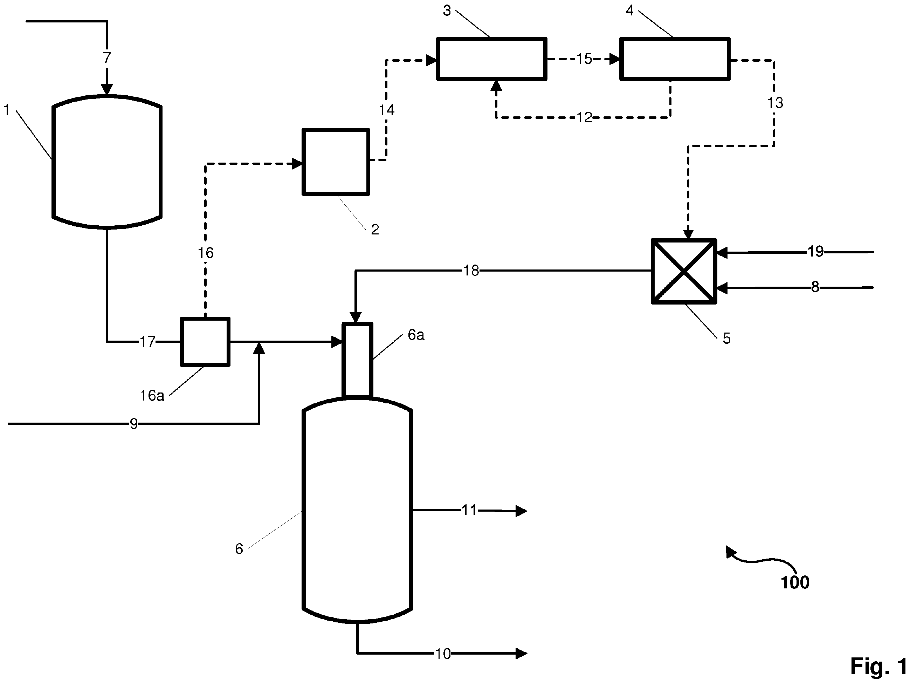

Es zeigt
- Figur 1: eine schematische Fließbilddarstellung des erfindungsgemäßen Verfahrens 100 oder der erfindungsgemäßen Anlage 100.

Über Fördermittel 7, beispielsweise ein Förderband, wird aus einem Silo (nicht gezeigt) entnommene und getrocknete Steinkohle (nicht gezeigt) in einen Festbrennstoffvorlagebehälter 1 gefördert. Die Kohle liegt in Staubform (Partikelgröße < 100 µm) mit einem Restfeuchtegehalt von 2 Gew.-% vor. Die Kohle wird über die Festbrennstoffleitung 17 unter Zugabe von aus Fördergasleitung 9 zugeführten Fördergases (Kohlenstoffdioxid) in den Brennerraum des Brenners 6a transportiert und im Feststoffvergaser 6 zu Synthesegas umgesetzt.

Der Feststoffvergaser 6, der Brenner 6a sowie die mit diesen Komponenten verbundene Peripherie, beispielsweise die zuführenden Leitungen 17 und 18 sowie eine abführende Produktgasleitung 11 sowie ein Schlackeabzug 10 bilden zusammen den Vergasungsreaktor.

Ziel des Vergasungsprozesses ist die Herstellung einer Menge von 50.000 (fünfzigtausend) Nm³ Synthesegas pro Stunde, wobei sich die angegebene Menge auf die Menge an erzeugtem Wasserstoff und Kohlenmonoxid bezieht. Synthesegas wird über Produktgasleitung 11 aus dem Feststoffvergaser 6 abgezogen.

Die Wasser- und Asche-freie Zusammensetzung der Steinkohle ist aus Laboranalysen bekannt (C: 86,77; H: 3,38; O: 8,32; N: 1,07; S: 0,46, jeweils in Gew.-%) und variiert nur wenig innerhalb einer Charge Steinkohle.

An der Probenentnahmestelle 16a wird über ein Festbrennstoffentnahmesystem aus Leitung 17 im Abstand von 5 Minuten eine Festbrennstoffprobe 16 entnommen und im Festbrennstoffanalysator 2 mittels Röntgenfluoreszenzanalyse (XRF) analysiert. Die ermittelten Festbrennstoffanalysedaten 14 umfassen den häufig stark schwankenden Mineraliengehalt sowie die Zusammensetzung der Mineralien der Steinkohle, welche in den vollständig oxidierten Zustand umgerechnet und damit als Aschegehalt und Aschezusammensetzung weiterverarbeitet werden. Im Beispiel weist die Steinkohle einen Aschegehalt von 11,75 Gew.-% auf, wobei dieser Anteil folgende Zusammensetzung (angegeben sind die Hauptkomponenten jeweils in Gew.-%, keine Angaben von Spurenelementen) aufweist: 55,87 SiO₂; 21,53 Al₂O₃; 11,21 Fe₂O₃; 2,68 CaO; 1,17 TiO₂; 2,16 SO₃; 0,32 P₂O₅; 2,29 K₂O sowie 0,15 MnO.

Die Festbrennstoffanalysendaten 14 werden an ein Prozessmodell 3 weitergegeben, welches eine Massen-, Energie- und Elementebilanz des Vergasungsprozesses berechnet. Um den Vergasungsreaktor und das Ascheverhalten abzubilden, wird ein thermodynamisches Gleichgewichtsmodell verwendet, wie es in Gräbner, M.: "Industrial Coal Gasification Technologies Covering Baseline and High-Ash Coal", Wiley-VCH, ISBN 978-3-527-33690-6, 2014 auf den Seiten 131 ff. beschrieben ist.

Für die Berechnung sind außer den Festbrennstoffanalysendaten 14 weitere Betriebsdaten 12 des Vergasungsprozesses erforderlich, welche an das Prozessleitsystem übermittelt werden (nicht gezeigt), aus dem Prozessleitsystem 4 ausgelesen und an das Prozessmodell 3 übergeben werden. Die Betriebsdaten 12 umfassen aktuelle Werte für
- den Zustand von Vergasungsmittel aus Vergasungsmittelleitung 19 (Sauerstoff mit 99,6 Reinheit bei 180 °C und 42,5 bar),
- den Zustand des Moderators aus Moderatorleitung 8 (Wasserdampf bei 400 °C und 48 bar),
- die Art, mögliche Beladung und den Zustand des Festbrennstoff-Fördergases aus Fördergasleitung 9 (Kohlendioxid, 390 kg staubförmige Steinkohle pro effektivem m³ CO₂, bei 80 °C und 43 bar),
- den Zustand des dem Feststoffvergaser 6 über Festbrennstoffleitung 17 zugeführten Festbrennstoff 7 (80 °C, 43 bar),
- den Prozessdruck (40 bar),
- die Dampfmenge und den Dampfzustand, welche durch die Kühlung der Reaktorwand des Feststoffvergasers 6 erzeugt werden (Dampf: 3000 kg/h bei 46 bar und 260 °C, ersetzt durch Kesselspeisewasser bei 48 bar und 170 °C), sowie
- die Füllstände aller Behälter zwischen Probenentnahmestelle 16a und Feststoffvergaser 6 (nicht gezeigt).

Das Prozessmodell 3 berechnet zunächst die Liquidustemperatur (1430 °C) aus der Aschezusammensetzung. Diese wird als minimale Reaktortemperatur für den Vergasungsreaktor definiert, um einen sicheren Ablauf der Schlacke aus Feststoffvergaser 6 über Schlackeabzug 10 zu gewährleisten. Weiterhin wird für diese Temperatur ein entsprechender Kohlenstoffumsatz (97 %) mit Hilfe einer empirischen Gleichung berechnet. Anschließend variiert das Prozessmodell iterativ
- den Sauerstoffvolumenstrom derart, dass die Reaktortemperatur von 1430 °C erreicht wird (14.840 Nm³/h),
- den Moderatormassenstrom (Dampf) so, dass der Kohlenstoffumsatz von 97 % erreicht wird (770 kg/h), und
- den Steinkohlemassenstrom so, dass die Synthesegasmenge von 50.000 m³/h Wasserstoff und Kohlenmonoxid erreicht wird (27.175 kg/h).

Die so ermittelten Einstellungen stellen den minimal erforderlichen Verbrauch an Sauerstoff, Kohle und Dampf dar, um 50.000 Nm³/h Wasserstoff und Kohlenmonoxid aufweisendes Synthesegas zu erzeugen. Somit werden diese Einstellungen auch als optimale Betriebsbedingungen 15 oder Betriebspunkt bezeichnet.

Entsprechend der Länge der Festbrennstoffleitung 17, des Kohlemassenstroms und der Füllstände aller Behälter (nicht gezeigt) zwischen Probenentnahmestelle 16a und Feststoffvergaser 6 wird vom Prozessmodell 3 die Totzeit berechnet, die zwischen Brennstoff-Probennahme und dem tatsächlichen Eintritt der Steinkohle in den Feststoffvergaser 6 liegt (23 Minuten). Daraus wird der Zeitpunkt errechnet, zu dem die Einstellung der optimalen Betriebsbedingungen 15 (des Betriebspunkts) an das Prozessleitsystem 4 zur Einstellung der Mengen und Bedingungen für Vergasungsmittel in Vergasungsmittelleitung 19 und Moderator in Moderatorleitung 8 übergeben wird. Die Einstellung erfolgt mit Hilfe der Steuerung 13 des Prozessleitsystems 4, basierend auf den vom Prozessmodell 3 an das Prozessleitsystem 4 übermittelten optimalen Betriebsbedingungen 15. Der Kohlemassenstrom wird automatisch über die Festlegung des Sauerstoff- zu Kohlemassenstromverhältnisses (O₂/Kohle = 0,78 kg/kg) über das Prozessleitsystem 4 eingestellt.

Moderator und Vergasungsmittel werden in der Mischstelle 5 vermischt und über Leitung 18 als Gemisch zum Brenner 6a des Feststoffvergasers 6 transportiert. Im Brenner 6a und Feststoffvergaser 6 wird mit Kohlendioxid aus Fördergasleitung 9 geförderte Kohle aus Festbrennstoffleitung 17 mit Vergasungsmittel und Moderator aus Leitung 18 zu Synthesegas umgesetzt.

Entsprechend der Frequenz der Feststoffprobenentnahme von 5 Minuten werden die optimalen Betriebsbedingungen 15 im selben Intervall unter Berücksichtigung der Totzeit erneuert an das Prozessleitsystem 4 übergeben. Damit kann ein effizienter Betrieb des Vergasungsreaktors selbst bei hohen Schwankungen der Aschegehalte und Aschezusammensetzung der Steinkohle sichergestellt werden. Ausführungsformen der Erfindung werden unter Bezugnahme auf verschiedene Arten von Gegenständen beschrieben. Insbesondere werden bestimmte Ausführungsformen unter Bezugnahme auf Ansprüche des Verfahrenstyps beschrieben, während andere Ausführungsformen unter Bezugnahme auf die Ansprüche des Vorrichtungstyps beschrieben werden. Ein Fachmann wird jedoch aus der obigen und der folgenden Beschreibung entnehmen, dass, außer anders angegeben, zusätzlich zu irgendeiner Kombination von Merkmalen, die zu einer Art von Anspruchstyp gehören, auch jede Kombination zwischen Merkmalen in Bezug auf verschiede Arten von Gegenständen oder Anspruchstypen in Betracht gezogen werden kann. Alle Merkmale können kombiniert werden um synergetische Effekte zu erzielen, welche über die einfache Summierung der technischen Merkmale hinausgehen.

Während die Erfindung im Detail in der Zeichnung und der vorhergehenden Beschreibung dargestellt und beschrieben wurde, sollen eine solche Darstellung und Beschreibung als veranschaulichend oder beispielhaft und nicht einschränkend betrachtet werden.

In den Ansprüchen schließt das Wort "aufweisend" oder "umfassend" weitere Elemente oder Schritte nicht aus, und der unbestimmte Artikel "ein" oder "eine" schließt eine Mehrzahl nicht aus. Bezugszeichen in den Ansprüchen sollten nicht so ausgelegt werden, dass sie den Umfang der Ansprüche einschränken.

### Bezugszeichenliste

- 1: Festbrennstoffvorlagebehälter
- 2: Festbrennstoffanalysator
- 3: Prozessmodell
- 4: Prozessleitsystem
- 5: Mischstelle
- 6: Feststoffvergaser
- 6a: Brenner
- 7: Fördermittel
- 8: Moderatorleitung
- 9: Fördergasleitung
- 10: Schlackeabzug
- 11: Produktgasleitung
- 12: Betriebsdaten
- 13: Steuerung
- 14: Festbrennstoffanalysendaten
- 15: Optimale Betriebsbedingungen
- 16: Festbrennstoffprobe
- 16a: Probenentnahmestelle
- 17: Festbrennstoffleitung
- 18: Leitung
- 19: Vergasungsmittelleitung
- 100: Verfahren oder Anlage

## Patentansprüche

1. Verfahren (100) zur online-Steuerung eines Schlacke bildenden Vergasungsprozesses eines kohlenstoffhaltigen Festbrennstoffs, insbesondere Kohle, in einem Vergasungsreaktor unter Zuführung eines Vergasungsmittels sowie eines Moderators, umfassend die Schritte
a) Festlegung der Menge eines durch den Vergasungsprozess herzustellenden Produktgases, insbesondere eines Synthesegases;
b) Durchführen einer online-Festbrennstoffanalyse an einer vor Eintritt des Festbrennstoffs in den Vergasungsreaktor entnommenen Festbrennstoffprobe (16) durch einen online-Festbrennstoffanalysator (2), zur Bestimmung des Aschegehalts sowie der Aschezusammensetzung des Festbrennstoffs vor Eintritt in den Vergasungsreaktor;
c) Auslesen von Betriebsdaten (12) des Vergasungsreaktors über ein Prozessleitsystem (4);
d) Verarbeitung der Daten der online-Festbrennstoffanalyse (14) sowie der Betriebsdaten (12) des Vergasungsreaktors in einem Prozessmodell (3) zur Ermittlung eines Betriebspunkts (15) des Vergasungsreaktors bei gleichzeitiger Erreichung der festgelegten Produktgasmenge, wobei durch das Prozessmodell (3)
i. die Betriebstemperatur des Vergasungsreaktors auf Basis der durch die online-Festbrennstoffanalyse ermittelten Aschezusammensetzung bestimmt wird, um einen im wesentlich vollständigen Schlacke-Abfluss aus dem Vergasungsreaktor zu ermöglichen;
ii. der erforderliche Massenstrom an Festbrennstoff auf Basis des durch die online-Festbrennstoffanalyse ermittelten Aschegehalts bestimmt wird; und
iii. der erforderliche Massenstrom an Vergasungsmittel sowie Moderator auf Basis der Betriebsdaten (12) des Vergasungsreaktors bestimmt wird;
e) Einstellen des Betriebspunkts (15) des Vergasungsreaktors durch das Prozessleitsystem (4) zur Steuerung (13) des Vergasungsprozesses.

2. Verfahren nach Anspruch 1, **dadurch gekennzeichnet, dass** die Schritte b) bis e) fortlaufend wiederholt werden, um in Abhängigkeit von zeitlichen Schwankungen des Aschegehalts und der Aschezusammensetzung des Festbrennstoffs kontinuierlich den Betriebspunkt (15) des Vergasungsreaktors einzustellen.

3. Verfahren nach Anspruch 2, **dadurch gekennzeichnet, dass** die Schritte b) bis e) im Abstand von 10 Sekunden bis 300 Minuten wiederholt werden, vorzugsweise im Abstand von 1 Minute bis 60 Minuten wiederholt werden, besonders bevorzugt im Abstand von 3 Minuten bis 30 Minuten wiederholt werden, weiter bevorzugt im Abstand von 5 Minuten bis 10 Minuten wiederholt werden.

4. Verfahren nach einem der Ansprüche 1 bis 3, **dadurch gekennzeichnet, dass** die Betriebstemperatur des Vergasungsreaktors auf Basis eines thermodynamischen Modells zur Bestimmung der Asche-Liquidustemperatur als Funktion der Aschezusammensetzung berechnet wird, wobei die berechnete Asche-Liquidustemperatur der Betriebstemperatur des Vergasungsreaktors entspricht.

5. Verfahren nach einem der Ansprüche 1 bis 3, **dadurch gekennzeichnet, dass** die Betriebstemperatur des Vergasungsreaktors auf Basis eines künstlichen neuronalen Netzwerk-Modells zur Bestimmung der Asche-Fließtemperatur als Funktion der Aschezusammensetzung berechnet wird, wobei die Betriebstemperatur oberhalb der berechneten Asche-Fließtemperatur liegt, vorzugsweise 50 bis 100 K oberhalb der berechneten Asche-Fließtemperatur liegt.

6. Verfahren nach einem der vorherigen Ansprüche, **dadurch gekennzeichnet, dass** die online-Festbrennstoffanalyse gemäß Schritt b) mit Hilfe eines Verfahrens ausgewählt aus der Gruppe umfassend
- prompt gamma neutron activation analysis (PGNAA),
- laser induced breakdown spectroscopy (LIBS) und
- Röntgen-Fluoreszenzanalyse (XRF)
durchgeführt wird.

7. Verfahren nach einem der vorherigen Ansprüche, **dadurch gekennzeichnet, dass** die Bestimmung des Aschegehalts und der Aschezusammensetzung auf Basis typischer Oxidationsverhältnisse der analysierten, anorganische Verbindungen bildenden Elemente erfolgt.

8. Verfahren nach einem der vorherigen Ansprüche, **dadurch gekennzeichnet, dass** das Verfahren die Bestimmung des organischen Anteils und der organischen Zusammensetzung des Festbrennstoffs sowie die Bestimmung des Wassergehalts des Festbrennstoffs vor Eintritt in den Vergasungsreaktor umfasst, und im Prozessmodell (3) aus dem Aschegehalt, der Aschezusammensetzung, dem organischen Anteil, der organischen Zusammensetzung und dem Wassergehalt des Festbrennstoffs die Gesamtzusammensetzung des Festbrennstoffs ermittelt wird.

9. Verfahren nach Anspruch 8, **dadurch gekennzeichnet, dass** aus der Gesamtzusammensetzung des Festbrennstoffs der Heizwert und/oder der Brennwert des Festbrennstoffs ermittelt wird.

10. Verfahren nach einem der Ansprüche 8 oder 9, **dadurch gekennzeichnet, dass** die Bestimmung des organischen Anteils und der organischen Zusammensetzung und/oder die Bestimmung des Wassergehalts des Festbrennstoffs durch den online-Festbrennstoffanalysator (2) gemäß Schritt b) erfolgt.

11. Verfahren nach einem der vorherigen Ansprüche, **dadurch gekennzeichnet, dass** das Verfahren die Bestimmung der Schüttdichte des Festbrennstoffs vor Eintritt in den Vergasungsreaktor umfasst.

12. Verfahren nach einem der vorherigen Ansprüche, **dadurch gekennzeichnet, dass** das Verfahren die Bestimmung des Zeitintervalls zwischen der Entnahme der Festbrennstoffprobe (16) und dem Eintritt des durch die Festbrennstoffanalyse (14) repräsentierten Festbrennstoffs in den Vergasungsreaktor umfasst, um den gemäß Schritt d) ermittelten Betriebspunkt (15) zum Zeitpunkt des Eintritts des durch die Festbrennstoffanalyse repräsentierten Festbrennstoffs in den Vergasungsreaktor (6) über das Prozessleitsystem (4) gemäß Schritt e) einzustellen.

13. Verfahren nach einem der vorherigen Ansprüche, **dadurch gekennzeichnet, dass** der Festbrennstoff ausgewählt ist aus einem Element der Gruppe umfassend Kohle, Biomasse, Klärschlamm, Refuse Derived Fuel sowie mit Mineralien verunreinigte Kunststoffe.

14. Verfahren nach einem der vorherigen Ansprüche, **dadurch gekennzeichnet, dass** die Festbrennstoffprobe zum Durchführen der online-Festbrennstoffanalyse in partikulärer Form, vorzugsweise in Staubform, bereitgestellt wird.

15. Vergasungsprozess zur Herstellung eines Kohlenstoffmonoxid und Wasserstoff aufweisenden Produktgases aus einem Festbrennstoff unter erhöhtem Druck und bei erhöhter Temperatur, umfassend ein Verfahren zur online-Steuerung gemäß einem der Ansprüche 1 bis 14.

16. Computerprogramm, ladbar in den Speicher einer Datenverarbeitungsvorrichtung einer Anlage nach Anspruch 17 zum Durchführen von Schritt d) bei der Durchführung des Verfahrens nach einem der Ansprüche 1 bis 14.

17. Anlage (100) zur Durchführung eines Vergasungsprozesses zur Herstellung eines Kohlenstoffmonoxid und Wasserstoff aufweisenden Produktgases (11) aus einem Festbrennstoff unter erhöhtem Druck und erhöhter Temperatur, aufweisend einen Festbrennstoffvorlagebehälter (1);
Fördermittel zum Transportieren des Festbrennstoffs vom Festbrennstoffvorlagebehälter in einen Vergasungsreaktor;
Fördermittel zum Zuführen von Vergasungsmittel und Moderator zum Vergasungsreaktor;
Fördermittel zum Abziehen des erzeugten Produktgases (11) aus dem Vergasungsreaktor;
eine zwischen dem Festbrennstoffvorlagebehälter und dem Vergasungsreaktor angeordnete Probenentnahmestelle (16a) zur Entnahme von Festbrennstoffproben (16) und anschließender Durchführung einer online-Festbrennstoffanalyse zur Ermittlung der Zusammensetzung und des Anteils der Asche des Festbrennstoffs in einem mit der Probenentnahmestelle gekoppelten online-Festbrennstoffanalysator (2);
ein mit dem Vergasungsreaktor gekoppeltes Prozessleitsystem (4); und
eine mit dem online-Festbrennstoffanalysator (2) und dem Prozessleitsystem (4) gekoppelte Datenverarbeitungsvorrichtung zur Verarbeitung der im online-Festbrennstoffanalysator (2) ermittelten Analysedaten (14) sowie zur Verarbeitung der durch das Prozessleitsystem (4) an die Datenverarbeitungsvorrichtung übermittelten Betriebsdaten (12) des Vergasungsreaktors, wobei aus den Analysendaten (14) des Festbrennstoffanalysators (2) und den Betriebsdaten (12) des Vergasungsreaktors (6) in der Datenverarbeitungsvorrichtung über ein Prozessmodell (3) ein Betriebspunkt (15) des Vergasungsreaktors ermittelbar ist, und der Vergasungsprozess über den von der Datenverarbeitungsvorrichtung an das Prozessleitsystem (4) übermittelten Betriebspunkt (15) steuerbar ist.

## Claims

1. Method (100) of online control of a slag-forming process of gasification of a carbonaceous solid fuel, especially coal, in a gasification reactor with supply of a gasifying agent and a moderator, comprising the steps of
a) defining the volume of a product gas to be produced by the gasification process, especially of a synthesis gas;
b) conducting an online solid fuel analysis on a solid fuel sample (16) taken prior to entry of the solid fuel into the gasification reactor by means of an online solid fuel analyser (2) to determine the ash content and the ash composition of the solid fuel prior to entry into the gasification reactor;
c) reading out operating data (12) of the gasification reactor by means of a process control system (4);
d) processing the data from the online solid fuel analysis (14) and the operating data (12) of the gasification reactor in a process model (3) to ascertain an operating point (15) of the gasification reactor while simultaneously achieving the product gas volume defined, wherein the process model (3)
i. determines the operating temperature of the gasification reactor based on the ash composition ascertained by the online solid fuel analysis in order to enable essentially complete outflow of slag out of the gasification reactor;
ii. determines the required mass flow rate of solid fuel based on the ash content ascertained by the online solid fuel analysis; and
iii. determines the required mass flow rate of gasifying agent and moderator based on operating data (12) of the gasification reactor;
e) adjusting the operating point (15) of the gasification reactor by means of the process control system (4) for control (13) of the gasification process.

2. Method according to Claim 1, **characterized in that** steps b) to e) are repeated continuously in order to continuously adjust the operating point (15) of the gasification reactor depending on variations in the ash content and in the ash composition of the solid fuel over time.

3. Method according to Claim 2, **characterized in that** steps b) to e) are repeated at an interval of 10 seconds to 300 minutes, preferably repeated at an interval of 1 minute to 60 minutes, more preferably repeated at an interval of 3 minutes to 30 minutes, further preferably repeated at an interval of 5 minutes to 10 minutes.

4. Method according to any of Claims 1 to 3, **characterized in that** the operating temperature of the gasification reactor is calculated on the basis of a thermodynamic model for determination of the ash liquidus temperature as a function of the ash composition, wherein the calculated ash liquidus temperature corresponds to the operating temperature of the gasification reactor.

5. Method according to any of Claims 1 to 3, **characterized in that** the operating temperature of the gasification reactor is calculated on the basis of an artificial neural network model for determination of the ash fluid temperature as a function of the ash composition, wherein the operating temperature is above the calculated ash fluid temperature, preferably 50 to 100 K above the calculated ash fluid temperature.

6. Method according to any of the preceding claims, **characterized in that** the online solid fuel analysis in step b) is conducted with the aid of a method selected from the group comprising
- prompt gamma neutron activation analysis (PGNAA),
- laser induced breakdown spectroscopy (LIBS) and
- x-ray fluorescence analysis (XRF).

7. Method according to any of the preceding claims, **characterized in that** the ash content and the ash composition are determined on the basis of typical oxidation ratios of the analysed elements that form inorganic compounds.

8. Method according to any of the preceding claims, **characterized in that** the method comprises the determination of the organic content and the organic composition of the solid fuel and the determination of the water content of the solid fuel prior to entry into the gasification reactor, and the ash content, the ash composition, the organic content, the organic composition and the water content of the solid fuel are used in the process model (3) to ascertain the overall composition of the solid fuel.

9. Method according to Claim 8, **characterized in that** the overall composition of the solid fuel is used to ascertain the net calorific value and/or the gross calorific value of the solid fuel.

10. Method according to either of Claims 8 and 9, **characterized in that** the organic content and the organic composition and/or the water content of the solid fuel are determined by means of the online solid fuel analyser (2) in step b).

11. Method according to any of the preceding claims, **characterized in that** the method comprises the determination of the bulk density of the solid fuel prior to entry into the gasification reactor.

12. Method according to any of the preceding claims, **characterized in that** the method comprises the determination of the time interval between the taking of the solid fuel sample (16) and the entry of the solid fuel represented by the solid fuel analysis (14) into the gasification reactor in order to adjust the operating point (15) ascertained in step d) at the time of entry of the solid fuel represented by the solid fuel analysis into the gasification reactor (6) by means of the process control system (4) in step e) .

13. Method according to any of the preceding claims, **characterized in that** the solid fuel is selected from an element from the group comprising coal, biomass, sewage sludge, refuse derived fuel and mineral-contaminated plastics.

14. Method according to any of the preceding claims, **characterized in that** the solid fuel sample for conducting the online solid fuel analysis is provided in particulate form, preferably in dust form.

15. Gasification process for producing a product gas including carbon monoxide and hydrogen from a solid fuel under elevated pressure and at elevated temperature, comprising a method of online control according to any of Claims 1 to 14.

16. Computer program that can be loaded into the memory of a data processing device of a plant according to Claim 17 for conducting step d) in the performance of the method according to any of Claims 1 to 14.

17. Plant (100) for performing a gasification process for production of a product gas (11) including carbon monoxide and hydrogen from a solid fuel under elevated pressure and elevated temperature, having a solid fuel reservoir vessel (1);
conveying means for transporting the solid fuel from the solid fuel reservoir vessel into a gasification reactor;
conveying means for supplying gasifying agent and moderator to the gasification reactor;
conveying means for removing the product gas (11) generated from the gasification reactor;
a sampling point (16a) disposed between the solid fuel reservoir vessel and the gasification reactor for taking solid fuel samples (16) and then conducting an online solid fuel analysis to ascertain the composition and the ash content of the solid fuel in an online solid fuel analyser (2) coupled to the sampling point;
a process control system (4) coupled to the gasification reactor; and
a data processing device, coupled to the online solid fuel analyser (2) and the process control system (4), for processing the analysis data (14) ascertained in the online solid fuel analyser (2) and for processing the operating data (12) of the gasification reactor transmitted to the data processing device by the process control system (4), wherein the analysis data (14) from the solid fuel analyser (2) and the operating data (12) of the gasification reactor (6) can be used to ascertain an operating point (15) of the gasification reactor by means of a process model (3) in the data processing device, and the gasification process can be controlled by means of the operating point (15) transmitted to the process control system (4) by the data processing device.

## Revendications

1. Procédé (100) de commande en ligne d'un processus de gazéification avec formation de laitier d'un combustible solide carboné, notamment du charbon, dans un réacteur de gazéification avec apport d'un agent de gazéification et d'un modérateur, ledit procédé comprenant les étapes suivantes
a) déterminer la quantité d'un produit gazeux, en particulier un gaz de synthèse, que doit produire le processus de gazéification ;
b) effectuer une analyse de combustible solide en ligne sur un échantillon de combustible solide (16), prélevé avant que le combustible solide n'entre dans le réacteur de gazéification, à l'aide d'un analyseur de combustible solide en ligne (2) afin de déterminer la teneur en cendres et la composition des cendres du combustible solide avant qu'il n'entre dans le réacteur de gazéification ;
c) lire les données de fonctionnement (12) du réacteur de gazéification par le biais d'un système de conduite de processus (4);
d) traiter les données de l'analyse de combustible solide en ligne (14) et les données de fonctionnement (12) du réacteur de gazéification dans un modèle de processus (3) afin de déterminer un point de fonctionnement (15) du réacteur de gazéification tout en atteignant la quantité spécifiée de produit gazeux,
le modèle de processus (3) déterminant
i. la température de fonctionnement du réacteur de gazéification sur la base de la composition des cendres déterminée par l'analyse de combustible solide en ligne afin de permettre une évacuation sensiblement complète du laitier du réacteur de gazéification ;
ii. le débit massique requis de combustible solide sur la base de la teneur en cendres déterminée par l'analyse de combustible solide en ligne ; et
iii. le débit massique requis d'agent de gazéification et de modérateur sur la base des données de fonctionnement (12) du réacteur de gazéification ;
e) régler le point de fonctionnement (15) du réacteur de gazéification par le biais du système de conduite de processus (4) afin de commander (13) le processus de gazéification.

2. Procédé selon la revendication 1, **caractérisé en ce que** les étapes b) à e) sont répétées en continu afin de régler en continu le point de fonctionnement (15) du réacteur de gazéification en fonction de fluctuations temporelles de la teneur en cendres et de la composition des cendres du combustible solide.

3. Procédé selon la revendication 2, **caractérisé en ce que** les étapes b) à e) sont répétées à des intervalles de 10 secondes à 300 minutes, de préférence à des intervalles de 1 minute à 60 minutes, de manière particulièrement préférée à des intervalles de 3 minutes à 30 minutes, plus préférablement à des intervalles de 5 minutes à 10 minutes.

4. Procédé selon l'une des revendications 1 à 3, **caractérisé en ce que** la température de fonctionnement du réacteur de gazéification est calculée sur la base d'un modèle thermodynamique afin de déterminer la température de liquidus de cendres en fonction de la composition des cendres, la température de liquidus de cendres calculée correspondant à la température de fonctionnement du réacteur de gazéification.

5. Procédé selon l'une des revendications 1 à 3, **caractérisé en ce que** la température de fonctionnement du réacteur de gazéification est calculée sur la base d'un modèle de réseau neuronal artificiel afin de déterminer la température d'écoulement de cendres en fonction de la composition des cendres, la température de fonctionnement étant supérieure à la température d'écoulement de cendres calculée, de préférence de 50 à 100 K au-dessus de la température d'écoulement de cendres calculée.

6. Procédé selon l'une des revendications précédentes, **caractérisé en ce que** l'analyse de combustible solide en ligne selon l'étape b) est effectuée à l'aide d'un procédé choisi dans le groupe comprenant
- l'analyse par activation rapide des neutrons gamma (PGNAA),
- la spectroscopie de claquage induit par laser (LIBS) et
- l'analyse par fluorescence de rayons X (XRF).

7. Procédé selon l'une des revendications précédentes, **caractérisé en ce que** la détermination de la teneur en cendres et de la composition des cendres est effectuée sur la base de taux d'oxydation typiques des éléments analysés formant des composés minéraux.

8. Procédé selon l'une des revendications précédentes, **caractérisé en ce que** le procédé comprend la détermination de la fraction organique et de la composition organique du combustible solide et la détermination de la teneur en eau du combustible solide avant l'entrée dans le réacteur de gazéification et la composition totale du combustible solide est déterminée dans le modèle de processus (3) à partir de la teneur en cendres, de la composition des cendres, de la fraction organique, de la composition organique et de la teneur en eau du combustible solide.

9. Procédé selon la revendication 8, **caractérisé en ce que** le pouvoir calorifique et/ou la puissance calorifique du combustible solide sont déterminés à partir de la composition globale du combustible solide.

10. Procédé selon l'une des revendications 8 ou 9, **caractérisé en ce que** la détermination de la fraction organique et de la composition organique et/ou la détermination de la teneur en eau du combustible solide sont effectuées par l'analyseur de combustible solide en ligne (2) selon l'étape b).

11. Procédé selon l'une des revendications précédentes, **caractérisé en ce que** le procédé comprend la détermination de la densité apparente du combustible solide avant l'entrée dans le réacteur de gazéification.

12. Procédé selon l'une des revendications précédentes, **caractérisé en ce que** le procédé comprend la détermination de l'intervalle de temps entre le prélèvement de l'échantillon de combustible solide (16) et l'entrée du combustible solide, représenté par l'analyse de combustible solide (14), dans le réacteur de gazéification afin de régler, par le biais du système de conduite de processus (4) selon l'étape e), le point de fonctionnement (15) déterminé selon l'étape d) au moment où le combustible solide représenté par l'analyse de combustible solide entre dans le réacteur de gazéification (6).

13. Procédé selon l'une des revendications précédentes, **caractérisé en ce que** le combustible solide est choisi parmi un élément du groupe comprenant le charbon, la biomasse, les boues résiduaires, les combustibles provenant de déchets (refuse derived fuel) et les matières synthétiques contaminées par des minéraux.

14. Procédé selon l'une des revendications précédentes, **caractérisé en ce que** l'échantillon de combustible solide destiné à effectuer l'analyse de combustible solide en ligne est fourni sous forme particulaire, de préférence sous forme de poussières.

15. Processus de gazéification destiné à produire un produit gazeux contenant du monoxyde de carbone et de l'hydrogène à partir d'un combustible solide sous haute pression et à haute température, ledit processus comprenant un procédé de commande en ligne selon l'une des revendications 1 à 14.

16. Logiciel pouvant être chargé dans la mémoire d'un dispositif de traitement de données d'une installation selon la revendication 17 pour réaliser l'étape d) lors de la mise en œuvre du procédé selon l'une des revendications 1 à 14.

17. Installation (100) destinée à la mise en œuvre d'un processus de gazéification afin de produire un produit gazeux contenant du monoxyde de carbone et de l'hydrogène (11) à partir d'un combustible solide sous pression élevée et à température élevée, ladite installation comportant un réservoir de stockage de combustible solide (1) ;
des moyens de transport destinés à transporter le combustible solide du réservoir de stockage de combustible solide jusque dans un réacteur de gazéification ;
des moyens de transport destinés à amener l'agent de gazéification et le modérateur au réacteur de gazéification ;
des moyens de transport destinés à retirer le produit gazeux généré (11) du réacteur de gazéification ;
un point de prélèvement d'échantillons (16a) disposé entre le réservoir de stockage de combustible solide et le réacteur de gazéification et destiné à prélever des échantillons de combustible solide (16) puis à effectuer une analyse de combustible solide en ligne afin de déterminer la composition et la fraction des cendres du combustible solide dans un analyseur de combustible solide en ligne (2) accouplé au point de prélèvement d'échantillons ;
un système de conduite de processus (4) accouplé au réacteur de gazéification ; et
un dispositif de traitement de données couplé à l'analyseur de combustible solide en ligne (2) et au système de conduite de processus (4) et destiné à traiter les données d'analyse (14) déterminées dans l'analyseur de combustible solide en ligne (2) et à traiter les données de fonctionnement (12) du réacteur de gazéification qui ont été transmises par le système de conduite de processus (4) au dispositif de traitement de données, un point de fonctionnement (15) du réacteur de gazéification pouvant être déterminé dans le dispositif de traitement de données par le biais d'un modèle de processus (3) à partir des données d'analyse (14) de l'analyseur de combustible solide (2) et des données de fonctionnement (12) du réacteur de gazéification (6) et le processus de gazéification pouvant être commandé par le biais du point de fonctionnement (15) transmis par le dispositif de traitement de données au système de conduite de processus (4).
